# EUROPÄISCHE PATENTSCHRIFT

(11) **EP 1 720 927 B1**
(45) Veröffentlichungstag und Bekanntmachung des Hinweises auf die Patenterteilung: **29.08.2007**
(21) Anmeldenummer: 05707494.0
(22) Anmeldetag: 18.02.2005
(51) Int. Cl.: C08G 18/22

(54) **SCHUHSOHLEN AUS ZINN- UND ÜBERGANGSMETALLFREIEN POLYURETHANSCHAUMSTOFFEN**
SHOE SOLES MADE FROM TIN AND TRANSITION METAL FREE POLYURETHANE FOAMS
SEMELLE DE CHAUSSURE MANUFACTURE DE MOUSSES DE POLYURETHANE EXEMPTES D'ETAIN ET DE METAUX TRANSITOIRES

(30) Priorität: 25.02.2004 DE 102004009740
(43) Veröffentlichungstag der Anmeldung: 15.11.2006
(73) Patentinhaber: BASF Aktiengesellschaft, 67056 Ludwigshafen (DE)
(72) Erfinder: ORTALDA, Marco, I-10137 Torino (IT)
(86) Internationale Anmeldenummer: PCT/EP2005/001674
(87) Internationale Veröffentlichungsnummer: WO 2005/080464

(56) Entgegenhaltungen:
- EP-A- 1 443 065
- WO-A-98/14492
- US-A1- 2004 019 175
- ARENIVAR J D: "BISMUTH CARBOXYLATES FOR POLYURETHANE CATALYSIS" 1. Oktober 1989 (1989-10-01), ANNUAL POLYURETHANE TECHNICAL MARKETING CONFERENCE, PAGE(S) 623-627 , XP001181110 Seite 624, rechte Spalte - Seite 625, rechte Spalte

## Beschreibung

Die Erfindung betrifft Schuhsohlen enthaltend Zinnfreie Polyurethanschaumstoffe, erhältlich durch Umsetzung von Polyisocyanaten (a) mit Verbindungen mit gegenüber Isocyanaten reaktiven Wasserstoffatomen (b) in Gegenwart von Bismutcarboxylaten als Katalysatoren (c1).

Schaumstoffe aus Polyurethan (PUR) sind seit langem bekannt und haben eine Reihe technologisch nutzbarer Eigenschaften wie z.B. energieabsorbierende oder wärmeisolierende Eigenschaften bei gleichzeitig geringem Gewicht. Zu den vielseitigen Einsatzfeldern zählen u.a. Schuhsohlen, Lenkräder oder Dämpfungselemente für die Automobilindustrie. Für eine ökonomische Produktion von Formteilen müssen kurze Entformzeiten bei gleichzeitig ausreichendem Aushärteverhalten gewährleistet werden. Dies wird durch Kombinationen von Katalysatoren in den Systemen erzielt. Dem Stand der Technik kann entnommen werden, dass hierzu meist Gemische aus tertiären Aminen und zinnorganischen Verbindungen verwendet werden. Zu den tertiären Aminen, die als Katalysatoren Verwendung finden, zählt z.B. Triethylendiamin oder Bis(dimethylaminoethyl)ether. Beispiele für kommerziell verfügbare Katalysatoren, in denen diese Verbindungen als wirksamer Bestandteil enthalten sind, stellen Lupragen N203^{®} (BASF) oder Niax A1^{®} (Crompton) dar. Häufig werden Gemische dieser Amine eingesetzt. Als zinnorganische Verbindungen wird beispielsweise Dibutylzinndilaurat (Niax^{®} D22, Crompton) eingesetzt.

Der gleichzeitige Einsatz von Aminen und zinnorganischen Verbindungen hat eine synergistische Wirkung bezüglich der katalysierenden Eigenschaften, so dass der alleinige Einsatz von Amin-Katalysatoren für viele Anwendungen nicht zur Erzielung eines ausreichenden Aushärteverhaltens ausreicht. Hierzu zählen beispielsweise mikrozelluläre Schäumstoffe auf Basis von Polyetherolen, die zur Herstellung von Schuhsohlen verwendet werden. Ein unzureichendes Aushärteverhalten spiegelt sich u.a. in langen Knickzeiten oder einer mangelnden Dimensionsbeständigkeit der Schuhsohlen nach Entformung wieder. Die Knickzeit ist eine in der Schuhsohlen-Produktion angewendetes Verfahren zur Abschätzung der Entformzeit von Schuhsohlen. Die Knickzeit ist die Zeit, die ein Prüfkörper mindestens in der Form verbleiben muss, ohne dass es bei anschließender Deformation der Prüfplatte um 180° zu Oberflächenrissen kommt.

Der Einsatz von zinnorganischen Verbindungen in Gegenständen, die der Bekleidung dienen wie z.B. auch Schuhe wird von der Öffentlichkeit aufgrund der unklaren toxikologischen Bewertung zunehmend kritischer beurteilt. Daher besteht eine Nachfrage nach Systemen, die ohne Zinn-Katalysatoren verarbeitet werden können und die gleichzeitig ein zu konventionellen Zinn-katalysierten Systemen mindestens vergleichbares Aushärteverhalten aufweisen.

Der Einsatz von Bismutcarboxylaten zur Katalyse von PUR-Systemen ist für kompakte Coatingsysteme bekannt.

Ferner beschreibt DE-A-101 42 296 die Herstellung von Polyurethanelastomeren, wobei als Katalysatoren zinnhaltige Verbindungen durch Titan- und Zirkonverbindungen, gegebenenfalls in Ergänzung mit Bismutverbindungen, ersetzt werden.

Analog zu den oben genannten Gründen ist es aber auch sinnvoll, Polyurethanschaumstoffe bereit zu stellen, die keine Übergangsmetalle enthalten.

Es war Aufgabe der vorliegenden Erfindung Systeme bereitzustellen, die zur Herstellung von Polyurethanschaumstoffen, für Schuhsohlen, insbesondere von mikrozellulären PUR-Schuhsohlen verwendet werden können, wobei diese ohne die Verwendung von Zinn-Katalysatoren und ohne Verwendung von Katalysatoren enthaltend Übergangsmetalle ein mit den bekannten Systemen mindestens vergleichbares Aushärteverhalten und mindestens vergleichbare sonstige Verarbeitungs- und Gebrauchseigenschaften aufweisen sollen und gleichzeitig toxikologische und ökonomische Vorteile aufweisen sollen.

Die Aufgabe konnte durch Einsatz von Bismutcarboxylaten in speziellen Mengen als Zinn-Ersatz gelöst werden.

Gegenstand der Erfindung sind zinnfreie Polyurethanschaumstoffe, bevorzugt zinnfreie Polyurethanintegralschaumstoffe, besonders bevorzugt zinnfreie Polyurethanweichintegralschaümstoffe, mit einer Dichte von 100 bis 800 g/l, erhältlich durch Umsetzung von
a) Polyisocyanaten mit
b) Verbindungen mit gegenüber Isocyanaten reaktiven Wasserstoffatomen in Gegenwart von
c1) Bismutcarboxylaten als Katalysatoren, wobei die Bismutcarboxylaten in einer Menge von 0,2 bis 2 Gew.-%, bevorzugt 0,4 bis 1,5 Gew.-%, besonders bevorzugt 0,5 bis 1 Gew.-%; bezogen auf das Gesamtgewicht der Komponente b), eingesetzt werden.

Ferner ist Gegenstand der Erfindung ein Verfahren zur Herstellung von zinnfreien Polyurethanschaumschuhsohlen mit einer Dichte von 100 bis 800 g/l, erhältlich durch Umsetzung von
a) Polyisocyanaten mit
b) Verbindungen mit gegenüber Isocyanaten reaktiven Wasserstoffatomen in Gegenwart von
c1) Bismutcarboxylaten als Katalysatoren, wobei die Bismutcarboxylaten in einer Menge von 0,2 bis 2 Gew.-%, bevorzugt 0,4 bis 1,5 Gew.-%, besonders bevorzugt 0,5 bis 1 Gew.-%, bezogen auf das Gesamtgewicht der Komponente b), eingesetzt werden.

Schließlich ist Gegenstand der Erfindung die Verwendung von Bismutcarboxylaten als Ersatz für zinnhaltige Katalysatoren bei der Herstellung von Polyurethanen, insbesondere von Polyurethanschaumstoffen mit einer Dichte von 100 bis 800 g/l.

Unter zinnfreie Polyurethane werden im Rahmen dieser Erfindung Polyurethane verstanden, die ohne Zusatz von zinnhaltigen Verbindungen, wie beispielsweise die bekannten zinnhaltigen Katalysatoren, hergestellt werden. Es ist jedoch nicht auszuschließen, dass auch bei den erfindungsgemäßen Polyurethanen mit entsprechend genauen analytischen Methoden Zinn nachweisbar ist, welches als Verunreinigung der üblichen Einsatzstoffe in den Polyurethanschaumstoff gelangen kann.

Die erfindungsgemäßen Polyurethane weisen eine Dichte von 100 bis 800 g/l, bevorzugt von 150 bis 700 g/l, besonders bevorzugt von 200 bis 600 g/l auf.

In einer bevorzugten Ausführungsform handelt es sich bei den erfindungsgemäßen Polyurethanen um Integralschaumstoffe gemäß DIN 7726. Bei den erfindungsgemäßen Polyurethanintegralschaumstoffen handelt es sich im allgemeinen um Integralschaumstoffe gemäß DIN 7726. ln einer bevorzugten Ausführungsform betrifft die Erfindung lntegralschaumstoffe auf Basis von Polyurethanen mit einer Shore Härte im Bereich von 20-90 A, bevorzugt von 50 bis 80 Shore A, gemessen nach DIN 53505. Weiterhin weisen die erfindungsgemäßen Integralschaumstoffe bevorzugt eine Zugestigkeiten von 2 bis 20 N/mm², bevorzugt von 6 bis 18 N/mm², gemessen nach DIN 53 504 auf. Ferner weisen die erfindungsgemäßen Integralschaumstoffe bevorzugt eine Dehnung von 100 bis 800 %, bevorzugt von 220 bis 700, gemessen nach DIN 53504 auf. Schließlich weisen die erfindungsgemäßen Integralschaumstoffe bevorzugt eine Weiterreißfestigkeit von 2 bis 45 N/mm, bevorzugt von 8 bis 38 N/mm, gemessen nach DIN 53507, auf.

Insbesondere handelt es sich bei den erfindungsgemäßen Polyurethanen um elastomere, Polyurethan-Weichintegralschaumstoffe.

Die zur Herstellung der erfindungsgemäßen Polyurethanschaumstoffe verwendeten Polyisocyanate (a) umfassen die aus dem Stand der Technik bekannten aliphatischen, cycloaliphatischen und aromatischen Isocyanate sowie beliebige Mischungen daraus. Beispiele sind 4,4'-Diphenylmethandiisocyanat, die Mischungen aus monomeren Diphenylmethandüsocyanaten und höherkernigen Homologen des Diphenylmethandiisocyanats (Polymer-MDI), Tetramethylendiisocyanat, Hexamethylendiisocyanat (HDI), Toluylendiisocyanat TDI) oder Mischungen daraus.

Bevorzugt wird 4,4'-MDI und/oder HDI verwendet. Das besonders bevorzugt verwendete 4,4'-MDI kann geringe Mengen, bis etwa 10 Gew.-%, allophanat- oder uretoniminmodifizierte Polyisocyanate enthalten. Es können auch geringe Mengen Polyphenylenpolymethylenpolyisocyanat (Roh-MDI) eingesetzt werden. Die Gesamtmenge dieser hochfunktionellen Polyisocyanate sollte 5 Gew.-% des eingesetzten Isocyanats nicht überschreiten.

Die Polyisocyanate (a) können auch in Form von Polyisocyanatprepolymeren eingesetzt werden. Diese Prepolymere sind im Stand der Technik bekannt. Die Herstellung erfolgt auf an sich bekannte Weise, indem vorstehend beschriebene Polyisocyanate (a), beispielsweise bei Temperaturen von etwa 80°C, mit nachstehend beschriebenen Verbindungen mit gegenüber Isocyanaten reaktiven Wasserstoffatomen (b) zum Prepolymer umgesetzt werden. Das Polyol-Polyisocyanat-Verhältnis wird im allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt.

Als Verbindungen mit gegenüber Isocyanaten reaktiven Wasserstoffatomen (b) kommen Verbindungen in Frage, die zwei oder mehr reaktive Gruppen, ausgewählt aus OH-Gruppen, SH-Gruppen, NH-Gruppen, NH₂-Gruppen und CH-aciden Gruppen, wie z.B. β-Diketo-Gruppen, im Molekül tragen. Je nach Wahl der Komponente (b) umfasst im Rahmen dieser Erfindung der Begriff Polyurethane allgemein Polyisocyanat-Polyadditionsprodukte, beispielsweise auch Polyharnstoffe.

Im allgemeinen werden als Komponente (b) Verbindungen mit einer Funktionalität von 1,8 bis 8, vorzugsweise 2 bis 6, und einem Molekulargewicht von 300 bis 8000, vor zugsweise von 400 bis 6000 verwendet. Bewährt haben sich z.B. Polyether-polyamine und/oder vorzugsweise Polyole, ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole.

Vorzugsweise Anwendung finden Polyester-polyole und/oder Polyether-polyole. Besonders bevorzugt werden Polyether-Polyole eingesetzt, insbesondere solche, die mindestens 10 % primäre Hydroxylgruppen aufweisen. Die Hydroxylzahl der Polyhydroxylverbindungen beträgt dabei im allgemeinen 5 bis 1000, bevorzugt 15 bis 200. Des weiteren können die Verbindungen (b) in Mischung mit üblichen Kettenverlängerungs- und/oder Vernetzungsmitteln, wie beispielsweise Ethylenglykol, Butandiol, oder Diethylenglykol verwendet werden.

Als Polyetherole (b) können weiterhin sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meq/g, bevorzugt kleiner als 0,01 meq/g, verstanden. Derartige Polyetheralkohole werden zumeist durch Anlagerung von Alkylenoxiden, insbesondere Ethylenoxid, Propylenoxid und Mischungen daraus, an mindestens difunktionelle Alkohole in Gegenwart von sogenannten Doppelmetallcyanidkatalysatoren hergestellt.

Ferner hat sich im Rahmen dieser Erfindung gezeigt, dass die Komponente (c1) sehr vorteilhaft eingesetzt werden kann, wenn als Komponente (b) sogenannte Polymerpolyole mit einem Gehalt an thermoplastischen Polymeren von 2 bis 50 Gew.-%, bevorzugt 10 bis 45 Gew.-%, verwendet werden. Hierbei handelt es sich um auf dem Polyurethangebiet übliche Polymerpolyole, die auch häufig als Graft-Polyole bezeichnet werden. Diese Polymerpolyole sind allgemein bekannt und kommerziell erhältlich und werden üblicherweise durch radikalische Polymerisation von geeigneten olefinischen Monomeren, beispielsweise Styrol, Acrylnitril, Acrylaten und/oder Acrylamid, in einem als Propfgrundlage dienenden Polyetherol hergestellt. Die Seitenketten entstehen im allgemeinen durch Übertragung der Radikale von wachsenden Polymerketten auf Polyetherole. Das Polymer-Polyol enthält neben dem Propfcopolymerisaten überwiegend die Homopolymere der Olefine, dispergiert in unverändertem Polyetherol.

In einer bevorzugten Ausführungsform werden als Monomere Acrylnitril, Styrol, insbesondere Styrol und Acrylnitril im Verhältnis zwischen 1:1 bis 3:1, sowie gegebenenfalls in Gegenwart weiterer Monomeren, eines Makromers, eines Moderators und unter Einsatz eines Radikal-Initiators, meist Azo- oder Peroxidverbindungen, in einem Polyetherol bzw. Polyesterol als kontinuierlicher Phase hergestellt.

Als Trägerpolyetherole kommen vorstehend beschriebenen Polyetherole in Betracht.

Makromere, auch als Stabilisatoren bezeichnet, sind lineare oder verzweigte Polyole mit zahlenmittleren Molekulargewichten von bis zu 2000 g/mol, die mindestens eine endständige, reaktionsfähige olefinische ungesättigte Gruppe enthalten. Die ethylenisch ungesättigte Gruppe kann über Reaktion mit Anhydriden (Maleinsäureanhydrid, Fumarsäure), Acrylat- und Methacrylat-Derivaten sowie Isocyanat-Derivaten,wie 3-Isopropenyl-1,1-dimethylbenzyl-isocyanate, Isocyanato-ethylmethacrylate, an ein bereits bestehendes Polyol eingefügt werden.

Während der radikalischen Polymerisation werden die Makromere mit in die Copolymerkette eingebaut. Dadurch bilden sich Blockcopolymere mit einem Polyether- und einem Poly-acrylnitril-styroi-Block, welche in der Grenzfläche von kontinuierlicher Phase und dispergierter Phase als Phasenvermittler wirken und das Agglomerieren der Polymerpolyolpartikel unterdrücken. Der Anteil der Makromere beträgt üblicherweise 1 bis 15 Gew.-%, bezogen auf das Gesamtgewicht der zur Herstellung des Polymerpolyols eingesetzten Monomere.

In einer bevorzugten Ausführungsform werden 2 bis 50 Gew.-%, bevorzugt 5 bis 40 Gew.-%, mehr bevorzugt 7 bis 30 Gew.-% und besonders bevorzugt 10 bis 25 Gew.-% Polymerpolyole, bezogen auf 100 Gew.-% der Komponenten (b), eingesetzt.

Die Umsetzung der Komponenten a) und b) erfolgt üblicherweise in Gegenwart von Treibmitteln (d). Als Treibmittel (d) können allgemein bekannte chemisch oder physikalisch wirkende Verbindungen eingesetzt werden. Als chemisch wirkendes Treibmittel kann bevorzugt Wasser eingesetzt werden. Beispiele für physikalische Treibmittel sind inerte (cyclo)aliphatische Kohlenwasserstoffe mit 4 bis 8 Kohlenstoffatomen, die unter den Bedingungen der Polyurethanbildung verdampfen. Die Menge der eingesetzten Treibmittel richtet sich nach der angestrebten Dichte der Schaumstoffe.

Die Umsetzung der Komponenten a) und b erfolgt gegebenenfalls in Anwesenheit von (e) Hilfs- und/oder Zusatzstoffen, wie z.B. Zellreglern, Trennmitteln, Pigmenten, Verstärkungsstoffen wie Glasfasern, oberflächenaktiven Verbindungen und/oder Stabilisatoren gegen oxidativen, thermischen, hydrolytischen oder mikrobiellen Abbau oder Alterung.

Als Katalysatoren (Komponente c) werden bei den erfindungsgemäßen Polyurethanschaumstoffen Bismutcarboxylate (Komponente c1) eingesetzt. Bei den Bismutcarboxylaten (c1) liegt Bismut bevorzugt in den Oxidationsstufen 2 oder 3 vor, insbesondere 3. Zur Salzbildung werden als Carbonsäuren bevorzugt Carbonsäuren mit 6 bis 14 Kohlenstoffatomen, besonders bevorzugt mit 8 bis 12 Kohlenstoffatomen verwendet. Beispiele für besonders geeignete Bismutsalze sind Bismut(III)-neodecanoat, Bismut-2-etyhlhexanoat und Bismut-octanoat.

In einer bevorzugten Ausführungsform wird die Komponente (c1) vor Zugabe zur Umsetzung der Komponenten (a) und (b) in einer Carbonsäure gelöst und in gelöster Form der Umsetzung zugegeben. Als Lösungsmittel werden bevorzugt Carbonsäuren mit 6 bis 14 Kohlenstoffatomen, besonders bevorzugt mit 8 bis 12 Kohlenstoffatomen verwendet. Beispiele hierfür sind Octansäure oder Neodecansäure. Es ist bevorzugt, dass als Lösungsmittel die gleiche Säure verwendet wird, die auch in der Komponente (c1) den Carboxylatrest bildet.

In einer bevorzugten Ausführungsform erfolgt die Umsetzung der Komponenten a) und b) nur in Gegenwart von der Bismutcarboxylate (c1) als metallorganische Katalysatoren, d.h. es werden der Umsetzung keine weiteren metallorganischen Katalysatoren zugesetzt.

In einer bevorzugten Ausführungsform erfolgt Umsetzung der Komponenten a) und b) nicht nur in Gegenwart von Bismutcarboxylate (c1) als Katalysatoren sondern zusätzlich in Gegenwart von organischen Aminen (Komponente c2).

Als organische Amine sind die aus dem Stand der Technik bekannten tertiären Amine verwendbar. Bevorzugt werden tertiäre Amine eingesetzt.

In Betracht kommen beispielsweise organische Amine, wie Triethylamin, Triethylendiamin, Tributylamin, Dimethylbenzylamin, N,N,N',N'-Tetramethylethylendiamin, N,N,N',N'-Tetramethyl-butandiamin, N,N,N',N'-Tetramethyl-hexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, N-Cyclohexylmorpholin, 2-Dimethylamino-ethoxy-ethanol, Dimethylethanolamin, Tetramethylhexamethylendiamin, Dimethylamino-N-methyl-ethanolamin, N-Methylimidazol, N-(3-Aminopropyl)imidazol, N-(3-Aminopropyl)-2-Methylimidazol, 1-(2-Hydroxyethyl)-imidazol, N-Formyl-N,N'-dimethylbutylendiamin, N-Dimethylaminoethylmorpholin, 3,3'-Bis-dimethylamino-di-n-propylamin und/oder 2,2'-Dipiparazin-diisopropylether, Dimethylpiparazin, N,N'-Bis-(3-aminopropyl)-ethylendiamin und/oder Tris-(N,N-dimethylaminopropyl)-s-hexahydrotriazin, oder Mischungen enthaltend mindestens zwei der genannten Amine, wobei auch höhermolekulare tertiäre Amine, wie sie beispielsweise in DE-A 28 12 256 beschrieben sind, möglich sind.

In einer bevorzugten Ausführungsform beträgt das Gewichtsverhältnis von c1) zu c2) 0,005 zu 1 bis 0,5 zu 1, bevorzugt 0,01 zu 1 bis 0,3 zu 1.

Im allgemeinen wird die Komponente (a) als Isocyanatkomponente und die Komponente (b), im Gemisch mit der Komponenten (c) und gegebenenfalls Treibmitteln und Zusatzstoffen als Polyolkomponente bezeichnet.

Zur Herstellung von Polyurethanschaumstoffen werden im allgemeinen die Komponenten (a) und (b) in solchen Mengen zur Umsetzung gebracht, dass das Äquivalenzverhältnis von NCO-Gruppen zur Summe der reaktiven Wasserstoffatome 1:0,8 bis 1:1,25, vorzugsweise 1:0,9 bis 1:1,15 beträgt. Ein Verhältnis von 1:1 entspricht hierbei einem NCO-Index von 100.

Neben den erfindungsgemäßen Polyurethanschaumstoffen ist ferner die Verwendung von Bismutcarboxylate (c1) als alleinige metallorganische Katalysatoren als Ersatz für zinnhaltige Katalysatoren bei der Herstellung von Polyurethanen, insbesondere von Polyurethanschaumstoffen mit einer Dichte von 100 bis 800 g/l Gegenstand der Erfindung.

Die zinnfreien, erfindungsgemäßen Polyurethane finden zur Herstellung von Schuhsohlen Verwendung. Gegenstand der Erfindung sind somit zinnfreie Schuhsohlen, enthaltend die erfindungsgemäßen Polyurethanschaumstoffe.

Eine Verwendung von Bismutcarboxylaten als alleinige metallorganische Katalysatoren als Zinn-Ersatz zur Herstellung von Polyurethanen, insbesondere von mikrozellulären, elastomeren Schaumstoffen, insbesondere zur Herstellung von Schuhsohlen, wird durch den Stand der Technik nicht nahegelegt. Im Gegenteil, die in der Literatur bekannten Lösungen für zinnfreie PUR-Elastomere weisen darauf hin, dass ein Gemisch aus verschiedenen metallorganischen Katalysatoren notwendig ist.

Die Erfindung soll anhand nachfolgender Beispiele veranschaulicht werden.

### Beispiele

### Verwendete Einsatzstoffe:

| | |
|---|---|
| Polyol 1: | Polyether-Polyol, OHZ=27, nominale Funktionalität f=3, Verhältnis von PO/EO=77/21, EO-cap |
| Polyol 2 | Polyether-Polyol, OHZ=29, nominale Funktionalität f=2, Verhältnis von PO/EO =81/19, EO-cap |
| Polyol 3: | Graft-Polyetherpolyol, OHZ=27, nominale Funktionalität f=3, etwa 40 % Acrylnitril/Styrol |
| KV 1: | Monoethylenglykol |
| KV 2: | 1,4-Butandiol |
| Stabilisator: | Dabco DC 193^{®} (Air Products) |
| K1: | Amin-Katalysator, Dabco DC 1^{®} (Air Products) |
| K2: | Amin-Katalysator, Lupragen N 206^{®} (BASF) |
| K3: | Amin-Katalysator, Lupragen N 202^{®} (BASF) |
| K4: | Zinn-Katalysator, Niax^{®} D22 |
| K5: | Katalysator enthaltend Bismutneodecanoat |

### ISO 510^{®}, ISO 750/19^{®}, ISO 500^{®}:

Isocyanat-Prepolymere der Firma Elastogran auf Basis von 4,4'-MDI, einem Polyether-Polyol und ggf. Zusatz von niedermolekularen Diolen, NCO-Gehalt=13,9% für ISO 510 und ISO 750/19 sowie 20,4 % für ISO 500^{®}

### Herstellung der Integralschaumstoffe:

Die A- und B-Komponenten werden in den in den Beispielen beschriebenen Mischungsverhältnissen bei 23°C intensiv vermischt und die Mischung in ein auf 50°C temperiertes, plattenförmiges Formwerkzeug aus Aluminium mit den Abmessungen 20 x 20 x 1 cm in einer solchen Menge eingebracht, dass nach dem Aufschäumen und Aushärten im geschlossenen Formwerkzeug eine Integralschaumplatte der Dichte 550 g/L resultiert.

**Tabelle 1: Übersicht Systeme**

| | | | | | | | | |
|---|---|---|---|---|---|---|---|---|
| **Polyol-Komponente (A)** | **V1** | **1** | **V2** | **2** | **V3** | **3** | **V4** | **4** |
| **Polyol 1** | 27 | 27 | 37 | 37 | 45 | 45 | 52 | 52 |
| **Polyol 2** | 50 | 50 | 40 | 40 | 34 | 34 | 25 | 25 |
| **Polyol 3** | 10 | 10 | 10 | 10 | 10 | 10 | 10 | 10 |
| **KV 1** | 8,4 | 8,4 | 8,5 | 8,5 | 7,0 | 7,0 | - | - |
| **KV 2** | - | - | - | - | - | - | 9,5 | 9,5 |
| **Wasser** | 0,8 | 0,8 | 0,8 | 0,8 | 0,62 | 0,62 | 0,35 | 0,35 |
| **Stabilisator** | 0,2 | 0,2 | 0,2 | 0,2 | 0,2 | 0,2 | 0,40 | 0,40 |
| **K1** | 3,4 | 3,4 | 3,1 | 3,1 | 2,8 | 2,8 | - | - |
| **K2** | - | - | - | - | - | - | 1,41 | 1,41 |
| **K3** | - | - | - | - | - | - | 0,32 | 0,32 |
| **K4** | 0,03 | - | 0,03 | - | 0,02 | - | 0,02 | - |
| **K5** | - | 1 | - | 0,5 | - | 0,5 | - | 0,5 |
| **Isocyanat-Komponente (B)** | ISO 510 | ISO 510 | ISO 750/1 9 | ISO 750/1 9 | ISO A | ISO A | ISO 500 | ISO 500 |
| **MV A:B =100:x** | 131 | 132 | 133 | 134 | 85 | 86 | 70 | 71 |

**Tabelle 2: Übersicht Verarbeitungseigenschaften und mechanische Eigenschaften**

| | | | | | | | | |
|---|---|---|---|---|---|---|---|---|
| **Katalyse** | Zinn | Bi | Zinn | Bi | Zinn | Bi | Zinn | Bi |
| **Versuch** | V1 | 1 | V2 | 2 | V3 | 3 | V4 | 4 |
| **Startzeit [s]** | 12 | 12 | 12 | 10 | 14 | 10 | 10 | 10 |
| **Knickzeit [Min.]** | 07:30 | 05:00 | 07:00 | 03:45 | 06:00 | 04:15 | 04:15 | 04:15 |
| **Dimensionsänderung** | + | + | + | + | + | + | + | + |
| **Härte [Shore A] 10 min nach Entformen** | 55 | 53 | 52 | 53 | 55 | 57 | 51 | 50 |
| **Zugfestigkeit [N/mm²]** | 3,9 | 3,8 | 3,3 | 3,3 | 3,6 | 4,1 | 3,8 | 4,1 |
| **Reissdehnung [%]** | 441 | 436 | 458 | 485 | 429 | 414 | 380 | 388 |
| **Dauerbiege-Test*** | + | + | + | + | + | + | + | + |

| | | | | | | | | |
|---|---|---|---|---|---|---|---|---|
| *** + = Risserweiterung nach 100 kZyklen < 2mm** | | | | | | | | |

In Tabelle 1 sind die Zusammensetzungen von vier Systemen (1-4) mit erfindungsgemäßem Katalysator und den dazugehörigen Vergleichssystemen (V1-V4) mit Zinn-Katalysatoren zusammengefasst.

Tabelle 2 gibt eine Übersicht über die Verarbeitungseigenschaften und mechanischen Eigenschaften der Systeme. Die deutlich kürzeren Knickzeiten der Systeme 1 bis 4 demonstrieren ein gegenüber den Vergleichssystemen V1-V4 verbessertes Aushärteverhalten. Des weiteren wird eine vergleichbare Dimensionsstabilität nach Entformung erreicht. Wichtige mechanische Kenngrößen wie Zugfestigkeit, Dehnung oder Dauerbiege-Eigenschaften sind ebenfalls vergleichbar.

### Die Bestimmung der Messwerte erfolgt nach folgenden Vorschriften:

Rückprallelastizität nach DIN 53 512, Zugfestigkeit, Dehnung nach DIN 53 504, Härte Shore A nach DIN 53 505, Weiterreißfestigkeit nach DIN 53 507, Dauerbiege-Test nach DIN 53 543.

## Patentansprüche

1. Schuhsohle, enthaltend einen zinnfreien Polyurethanschaumstoff mit einer Dichte von 100 bis 800 g/l, erhältlich durch Umsetzung von
a) Polyisocyanaten mit
b) Verbindungen mit gegenüber Isocyanaten reaktiven Wasserstoffatomen in Gegenwart von
c1) Bismutcarboxylaten als Katalysatoren, wobei die Bismutcarboxylaten in einer Menge von 0,2 bis 2 Gew.-%, bezogen auf das Gesamtgewicht der Komponente b), eingesetzt werden.

2. Schuhsohle nach Anspruch 1, **dadurch gekennzeichnet, dass** die Bismutcarboxylate (c1) der Umsetzung der Komponenten a) und b) als alleinige metallorganische Katalysatoren zugesetzt werden.

3. Schuhsohle nach Anspruch 1 oder 2, **dadurch gekennzeichnet, dass** die Umsetzung der Komponenten a) und b) in Gegenwart von c1) und von c2) Aminen erfolgt, wobei das Gewichtsverhältnis von c1) zu c2) 0,005 zu 1 bis 0,5 zu 1 beträgt.

4. Schuhsohle nach einem der Ansprüche 1 bis 3, **dadurch gekennzeichnet, dass** es sich bei den Polyurethanschaumstoffen um Polyurethanintegralschaumstoffe, bevorzugt Polyurethanweichintegralschaumstoffe handelt.

5. Schuhsohle nach einem der Ansprüche 1 bis 4, **dadurch gekennzeichnet, dass** die Bismutcarboxylate (c1) aus Carbonsäuren mit 6 bis 12 Kohlenstoffatomen resultieren.

6. Verfahren zur Herstellung von Schuhsohlen, enthaltend einen zinnfreien Polyurethanschaumstoffe mit einer Dichte von 200 bis 800 g/l, erhältlich durch Umsetzung von
a) Polyisocyanaten mit
b) Verbindungen mit gegenüber Isocyanaten reaktiven Wasserstoffatomen in Gegenwart von
c1) Bismutcarboxylaten als Katalysatoren, wobei die Bismutcarboxylaten in einer Menge von 0,2 bis 2 Gew.-%, bezogen auf das Gesamtgewicht der Komponente b), eingesetzt werden.

7. Verwendung von Bismutcarboxylaten als alleinige metallorganische Katalysatoren als Ersatz für zinnhaltige Katalysatoren bei der Herstellung von Polyurethan Schuhsohlen.

## Claims

1. A shoe sole comprising a tin-free polyurethane foam which has a density of from 100 to 800 g/I and is obtainable by reacting
a) polyisocyanates with
b) compounds having isocyanate-reactive hydrogen atoms in the presence of
c1) bismuth carboxylates as catalysts, with the bismuth carboxylates being used in an amount of from 0.2 to 2% by weight, based on the total weight of the component b).

2. The shoe sole according to claim 1, wherein the bismuth carboxylates (c1) are added as sole organic metal catalysts to the reaction of the components a) and b).

3. The shoe sole according to claim 1 or 2, wherein the reaction of the components a) and b) is carried out in the presence of c1) and of c2) amines, with the weight ratio of c1) to c2) being from 0.005:1 to 0.5:1.

4. The shoe sole according to any of claims 1 to 3 which is an integral polyurethane foam, preferably a flexible integral polyurethane foam.

5. The shoe sole according to any of claims 1 to 4, wherein the bismuth carboxylates (c1) result from carboxylic acids having from 6 to 12 carbon atoms.

6. A process for producing shoe soles comprising tin-free polyurethane foams which have a density of from 200 to 800 g/l and are obtainable by reacting
a) polyisocyanates with
b) compounds having isocyanate-reactive hydrogen atoms in the presence of
c1) bismuth carboxylates as catalysts, with the bismuth carboxylates being used in an amount of from 0.2 to 2% by weight, based on the total weight of the component b).

7. The use of bismuth carboxylates as sole organic metal catalysts as substitutes for tin-containing catalysts in the production of polyurethane shoe soles.

## Revendications

1. Semelles de chaussures contenant une mousse de polyuréthanne exempte d'étain, d'une masse volumique de 100 à 800 g/1, que l'on peut obtenir par réaction de :
a) polyisocyanates avec
b) des composés comportant des atomes d'hydrogène réactifs vis-à-vis des isocyanates, en présence de
c) carboxylates de bismuth en tant que catalyseurs, les carboxylates de bismuth étant mis en oeuvre en une quantité de 0,2 à 2% en poids, par rapport au poids total du composant b).

2. Semelles de chaussures suivant la revendication 1, **caractérisées en ce que** les carboxylates de bismuth (c1) sont ajoutés à la réaction des composants a) et b) en tant que seuls catalyseurs organométalliques.

3. Semelles de chaussures suivant la revendication 1 ou 2, **caractérisées en ce que** la réaction des composants a) et b) a lieu en présence d'aminés c1) et c2), le rapport pondéral de c1) à c2) étant de 0,005 sur 1 à 0,5 sur 1.

4. Semelles de chaussures suivant l'une quelconque des revendications 1 à 3, **caractérisées en ce que** les mousses de polyuréthanne sont des mousses de polyuréthannes intégrales, de préférence des mousses de polyuréthanne intégrales souples.

5. Semelles de chaussures suivant l'une quelconque des revendications 1 à 4, **caractérisées en ce que** les carboxylates de bismuth (c1) proviennent d'acides carboxyliques comportant de 6 à 12 atomes de carbone.

6. Procédé de préparation de semelles de chaussures contenant une mousse de polyuréthanne exempte d'étain, d'une masse volumique de 200 à 800 g/1, que l'on peut obtenir par réaction de :
a) polyisocyanates avec
b) des composés comportant des atomes d'hydrogène réactifs vis-à-vis des isocyanates, en présence de
c) carboxylates de bismuth en tant que catalyseurs, les carboxylates de bismuth étant mis en oeuvre en une quantité de 0,2 à 2% en poids, par rapport au poids total du composant b).

7. Utilisation de carboxylates de bismuth en tant que seuls catalyseurs organométalliques en remplacement de catalyseurs à l'étain dans la préparation de semelles de chaussures en polyuréthanne.
